# EUROPEAN PATENT APPLICATION

(11) **EP 4 221 334 A1**
(43) Date of publication of application: **02.08.2023**
(21) Application number: 23164557.3
(22) Date of filing: 09.08.2019
(51) Int. Cl.: H04W 36/00, H04W 36/08, H04W 72/542, H04L 5/00, H04W 74/08

(54) **EUCA SECONDARY CELL DIRECT ACTIVATION**

(30) Priority: 10.08.2018 US 201862717554 P
(62) Divisional of application: 19848414.9
(71) Applicant: INTEL Corporation, Santa Clara, CA 95054 (US)
(72) Inventor: HUANG, Rui, Beijing, 100085 (CN); CUI, Jie, San Jose, CA, 95118 (US); TANG, Yang, San Jose, CA, 95120 (US); ZHOU, Yuhan, San Jose, CA, 95134 (US)
(74) Representative: Goddar, Heinz J.

(57) **Abstract**

An apparatus of a user equipment (UE) includes processing circuitry, where to configure the UE for enhanced utilization of carrier aggregation (euCA) secondary cell (SCell) direct activation, the processing circuitry is to decode radio resource control (RRC) signaling from a source base station. The RRC signaling includes a handover command for a handover to a primary serving cell (PSCell) of a target base station, and an SCell activation command for euCA direct activation of a SCell of the target base station. A random access channel (RACH) procedure is performed in connection with the handover to the PSCell of the target base station. Upon completion of the handover, cell measurements of the SCell of the target base station are performed. The cell measurements are encoded for transmission to the PSCell in a channel state information (CSI) report, to activate the SCell of the target base station.

## Description

### TECHNICAL FIELD

Aspects pertain to wireless communications. Some aspects relate to wireless networks including 3GPP (Third Generation Partnership Project) networks, 3GPP LTE (Long Term Evolution) networks, 3GPP LTE-A (LTE Advanced) networks, and fifth-generation (5G) networks including 5G new radio (NR) (or 5G-NR) networks and 5G-LTE networks. Other aspects are directed to systems and methods for enhanced utilization of carrier aggregation (euCA) secondary cell (SCell) direct activation when handover (HO).

### BACKGROUND

Mobile communications have evolved significantly from early voice systems to today's highly sophisticated integrated communication platform. With the increase in different types of devices communicating with various network devices, usage of 3GPP LTE systems has increased. The penetration of mobile devices (user equipment or UEs) in modern society has continued to drive demand for a wide variety of networked devices in a number of disparate environments. Fifth generation (5G) wireless systems are forthcoming and are expected to enable even greater speed, connectivity, and usability. Next generation 5G networks (or NR networks) are expected to increase throughput, coverage, and robustness and reduce latency and operational and capital expenditures. 5G-NR networks will continue to evolve based on 3GPP LTE-Advanced with additional potential new radio access technologies (RATs) to enrich people's lives with seamless wireless connectivity solutions delivering fast, rich content and services. As current cellular network frequency is saturated, higher frequencies, such as millimeter wave (mmWave) frequency, can be beneficial due to their high bandwidth.

Potential LTE operation in the unlicensed spectrum includes (and is not limited to) the LTE operation in the unlicensed spectrum via dual connectivity (DC), or DC-based LAA, and the standalone LTE system in the unlicensed spectrum, according to which LTE-based technology solely operates in unlicensed spectrum without requiring an "anchor" in the licensed spectrum, called MulteFire. MulteFire combines the performance benefits of LTE technology with the simplicity of Wi-Fi-like deployments.

Further enhanced operation of LTE systems in the licensed as well as unlicensed spectrum is expected in future releases and 5G systems. Such enhanced operations can include techniques for providing euCA SCell direct activation, such as euCA SCell direct activation during a HO procedure.

### BRIEF DESCRIPTION OF THE FIGURES

In the figures, which are not necessarily drawn to scale, like numerals may describe similar components in different views. Like numerals having different letter suffixes may represent different instances of similar components. The figures illustrate generally, by way of example, but not by way of limitation, various aspects discussed in the present document.
FIG. 1A illustrates an architecture of a network, in accordance with some aspects.
FIG. 1B and FIG. 1C illustrate a non-roaming 5G system architecture in accordance with some aspects.
FIG. 2 illustrates a communication exchange between a LTE, a source base station, and a target base station in connection with euCA SCell direct activation with handover, in accordance with some aspects.
FIG. 3 illustrates another communication exchange between a UE, a source base station, and a target base station in connection with euCA SCell direct activation with handover, in accordance with some aspects.
FIG. 4 illustrates a block diagram of a communication device such as an evolved Node-B (eNB), a new generation Node-B (gNB), an access point (AP), a wireless station (STA), a mobile station (MS), or a user equipment (UE), in accordance with some aspects.

### DETAILED DESCRIPTION

The following description and the drawings sufficiently illustrate aspects to enable those skilled in the art to practice them. Other aspects may incorporate structural, logical, electrical, process, and other changes. Portions and features of some aspects may be included in, or substituted for, those of other aspects. Aspects set forth in the claims encompass all available equivalents of those claims.

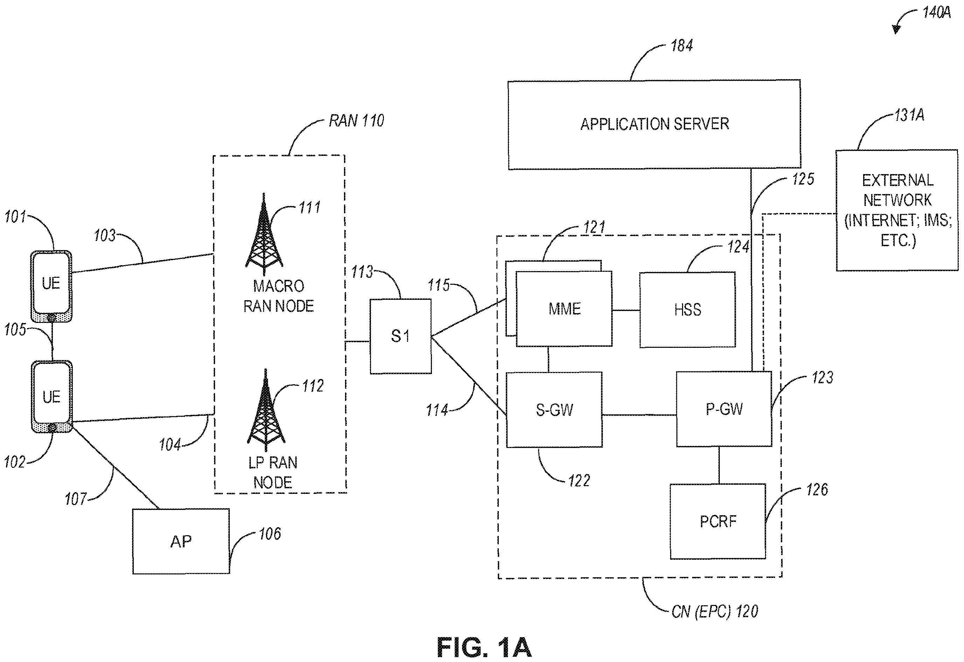

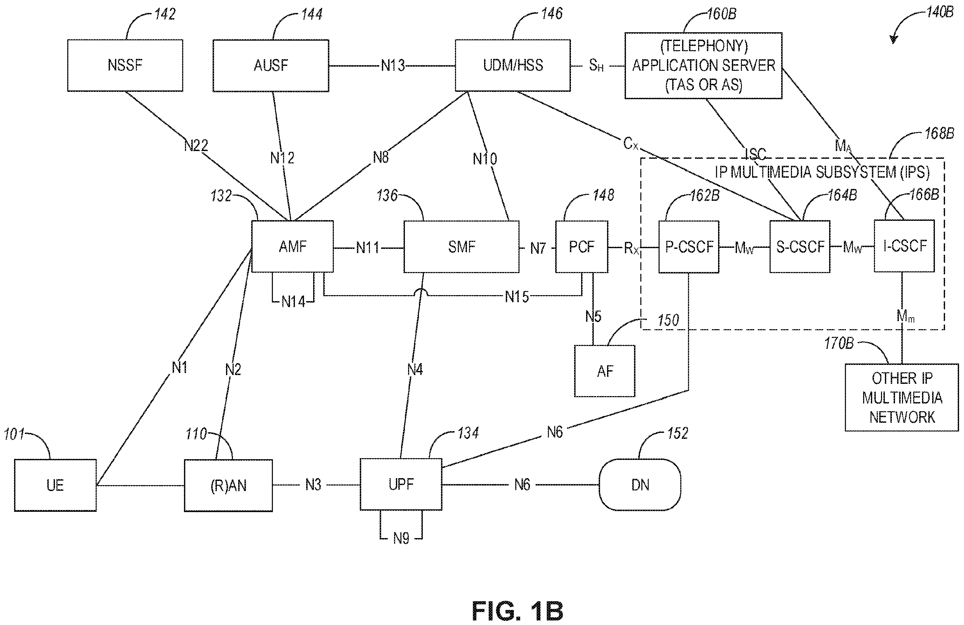

FIG. 1A illustrates an architecture of a network in accordance with some aspects. The network 140A is shown to include user equipment (UE) 101 and UE 102. The UEs 101 and 102 are illustrated as smartphones (e.g., handheld touchscreen mobile computing devices connectable to one or more cellular networks) but may also include any mobile or non-mobile computing device, such as Personal Data Assistants (PDAs), pagers, laptop computers, desktop computers, wireless handsets, drones, or any other computing device including a wired and/or wireless communications interface. The UEs 101 and 102 can be collectively referred to herein as UE 101, and UE 101 can be used to perform one or more of the techniques disclosed herein.

Any of the radio links described herein (e.g., as used in the network 140A or any other illustrated network) may operate according to any exemplary radio communication technology and/or standard.

LTE and LTE-Advanced are standards for wireless communications of highspeed data for UE such as mobile telephones. In LTE-Advanced and various wireless systems, carrier aggregation is a technology according to which multiple carrier signals operating on different frequencies may be used to carry communications for a single UE, thus increasing the bandwidth available to a single device. In some aspects, carrier aggregation may be used where one or more component carriers operate on unlicensed frequencies.

Aspects described herein can be used in the context of any spectrum management scheme including, for example, dedicated licensed spectrum, unlicensed spectrum, (licensed) shared spectrum (such as Licensed Shared Access (LSA) in 2.3-2.4 GHz, 3.4-3.6 GHz, 3.6-3.8 GHz, and further frequencies and Spectrum Access System (SAS) in 3.55-3.7 GHz and further frequencies).

Aspects described herein can also be applied to different Single Carrier or OFDM flavors (CP-OFDM, SC-FDMA, SC-OFDM, filter bank-based multicarrier (FBMC), OFDMA, etc.) and in particular 3GPP NR (New Radio) by allocating the OFDM carrier data bit vectors to the corresponding symbol resources.

In some aspects, any of the LTEs 101 and 102 can comprise an Intemet-of-Things (IoT) LTE or a Cellular IoT (CIoT) LTE, which can comprise a network access layer designed for low-power IoT applications utilizing short-lived UE connections. In some aspects, any of the UEs 101 and 102 can include a narrowband (NB) IoT UE (e.g., such as an enhanced NB-IoT (eNB-IoT) UE and Further Enhanced (FeNB-IoT) UE). An IoT UE can utilize technologies such as machine-to-machine (M2M) or machine-type communications (MTC) for exchanging data with an MTC server or device via a public land mobile network (PLMN), Proximity-Based Service (ProSe) or device-to-device (D2D) communication, sensor networks, or IoT networks. The M2M or MTC exchange of data may be a machine-initiated exchange of data. An IoT network includes interconnecting IoT UEs, which may include uniquely identifiable embedded computing devices (within the Internet infrastructure), with short-lived connections. The IoT UEs may execute background applications (e.g., keep-alive messages, status updates, etc.) to facilitate the connections of the IoT network.

In some aspects, any of the UEs 101 and 102 can include enhanced MTC (eMTC) UEs or further enhanced MTC (FeMTC) UEs.

The UEs 101 and 102 may be configured to connect, e.g., communicatively couple, with a radio access network (RAN) 110. The RAN 110 may be, for example, an Evolved Universal Mobile Telecommunications System (UMTS) Terrestrial Radio Access Network (E-UTRAN), a NextGen RAN (NG RAN), or some other type of RAN. The UEs 101 and 102 utilize connections 103 and 104, respectively, each of which comprises a physical communications interface or layer (discussed in further detail below); in this example, the connections 103 and 104 are illustrated as an air interface to enable communicative coupling, and can be consistent with cellular communications protocols, such as a Global System for Mobile Communications (GSM) protocol, a code-division multiple access (CDMA) network protocol, a Push-to-Talk (PTT) protocol, a PTT over Cellular (POC) protocol, a Universal Mobile Telecommunications System (UMTS) protocol, a 3GPP Long Term Evolution (LTE) protocol, a fifth generation (5G) protocol, a New Radio (NR) protocol, and the like.

In an aspect, the UEs 101 and 102 may further directly exchange communication data via a ProSe interface 105. The ProSe interface 105 may alternatively be referred to as a sidelink interface comprising one or more logical channels, including but not limited to a Physical Sidelink Control Channel (PSCCH), a Physical Sidelink Shared Channel (PSSCH), a Physical Sidelink Discovery Channel (PSDCH), and a Physical Sidelink Broadcast Channel (PSBCH).

The UE 102 is shown to be configured to access an access point (AP) 106 via connection 107. The connection 107 can comprise a local wireless connection, such as, for example, a connection consistent with any IEEE 802.11 protocol, according to which the AP 106 can comprise a wireless fidelity (WiFi^{®}) router. In this example, the AP 106 is shown to be connected to the Internet without connecting to the core network of the wireless system (described in further detail below).

The RAN 110 can include one or more access nodes that enable the connections 103 and 104. These access nodes (ANs) can be referred to as base stations (BSs), NodeBs, evolved NodeBs (eNBs), Next Generation NodeBs (gNBs), RAN nodes, and the like, and can comprise ground stations (e.g., terrestrial access points) or satellite stations providing coverage within a geographic area (e.g., a cell). In some aspects, the communication nodes 111 and 112 can be transmission/reception points (TRPs). In instances when the communication nodes 111 and 112 are NodeBs (e.g., eNBs or gNBs), one or more TRPs can function within the communication cell of the NodeBs. The RAN 110 may include one or more RAN nodes for providing macrocells, e.g., macro RAN node 111, and one or more RAN nodes for providing femtocells or picocells (e.g., cells having smaller coverage areas, smaller user capacity, or higher bandwidth compared to macrocells), e.g., low power (LP) RAN node 112.

Any of the RAN nodes 111 and 112 can terminate the air interface protocol and can be the first point of contact for the UEs 101 and 102. In some aspects, any of the RAN nodes 111 and 112 can fulfill various logical functions for the RAN 110 including, but not limited to, radio network controller (RNC) functions such as radio bearer management, uplink and downlink dynamic radio resource management and data packet scheduling, and mobility management. In an example, any of the nodes 111 and/or 112 can be a new generation node-B (gNB), an evolved node-B (eNB), or another type of RAN node.

The RAN 110 is shown to be communicatively coupled to a core network (CN) 120 via an S1 interface 113. In aspects, the CN 120 may be an evolved packet core (EPC) network, a NextGen Packet Core (NPC) network, or some other type of CN (e.g., as illustrated in reference to FIGS. 1B-1I). In this aspect, the S1 interface 113 is split into two parts: the S1-U interface 114, which carries traffic data between the RAN nodes 111 and 112 and the serving gateway (S-GW) 122, and the S1-mobility management entity (MME) interface 115, which is a signaling interface between the RAN nodes 111 and 112 and MMEs 121.

In this aspect, the CN 120 comprises the MMEs 121, the S-GW 122, the Packet Data Network (PDN) Gateway (P-GW) 123, and a home subscriber server (HSS) 124. The MMEs 121 may be similar in function to the control plane of legacy Serving General Packet Radio Service (GPRS) Support Nodes (SGSN). The MMEs 121 may manage mobility aspects in access such as gateway selection and tracking area list management. The HSS 124 may comprise a database for network users, including subscription-related information to support the network entities' handling of communication sessions. The CN 120 may comprise one or several HSSs 124, depending on the number of mobile subscribers, on the capacity of the equipment, on the organization of the network, etc. For example, the HSS 124 can provide support for routing/roaming, authentication, authorization, naming/addressing resolution, location dependencies, etc.

The S-GW 122 may terminate the S1 interface 113 towards the RAN 110, and routes data packets between the RAN 110 and the CN 120. In addition, the S-GW 122 may be a local mobility anchor point for inter-RAN node handovers and also may provide an anchor for inter-3GPP mobility. Other responsibilities of the S-GW 122 may include a lawful intercept, charging, and some policy enforcement.

The P-GW 123 may terminate an SGi interface toward a PDN. The P-GW 123 may route data packets between the EPC network 120 and external networks such as a network including the application server 184 (alternatively referred to as application function (AF)) via an Internet Protocol (IP) interface 125. The P-GW 123 can also communicate data to other external networks 131A, which can include the Internet, IP multimedia subsystem (IPS) network, and other networks. Generally, the application server 184 may be an element offering applications that use IP bearer resources with the core network (e.g., UMTS Packet Services (PS) domain, LTE PS data services, etc.). In this aspect, the P-GW 123 is shown to be communicatively coupled to an application server 184 via an IP interface 125. The application server 184 can also be configured to support one or more communication services (e.g., Voice-over-Internet Protocol (VoIP) sessions, PTT sessions, group communication sessions, social networking services, etc.) for the UEs 101 and 102 via the CN 120.

The P-GW 123 may further be a node for policy enforcement and charging data collection. Policy and Charging Rules Function (PCRF) 126 is the policy and charging control element of the CN 120. In a non-roaming scenario, in some aspects, there may be a single PCRF in the Home Public Land Mobile Network (HPLMN) associated with a UE's Internet Protocol Connectivity Access Network (IP-CAN) session. In a roaming scenario with a local breakout of traffic, there may be two PCRFs associated with a UE's IP-CAN session: a Home PCRF (H-PCRF) within an HPLMN and a Visited PCRF (V-PCRF) within a Visited Public Land Mobile Network (VPLMN). The PCRF 126 may be communicatively coupled to the application server 184 via the P-GW 123.

In some aspects, the communication network 140A can be an IoT network. One of the current enablers of IoT is the narrowband-IoT (NB-IoT).

A NG system architecture can include the RAN 110 and a 5G network core (5GC) 120. The NG-RAN 110 can include a plurality of nodes, such as gNBs and NG-eNBs. The core network 120 (e.g., a 5G core network or 5GC) can include an access and mobility function (AMF) and/or a user plane function (UPF). The AMF and the UPF can be communicatively coupled to the gNBs and the NG-eNBs via NG interfaces. More specifically, in some aspects, the gNBs and the NG-eNBs can be connected to the AMF by NG-C interfaces, and to the UPF by NG-U interfaces. The gNBs and the NG-eNBs can be coupled to each other via Xn interfaces.

In some aspects, the NG system architecture can use reference points between various nodes as provided by 3GPP Technical Specification (TS) 23.501 (e.g., V15.4.0, 2018-12). In some aspects, each of the gNBs and the NG-eNBs can be implemented as a base station, a mobile edge server, a small cell, a home eNB, and so forth. In some aspects, a gNB can be a master node (MN) and NG-eNB can be a secondary node (SN) in a 5G architecture.

FIG. 1B illustrates a non-roaming 5G system architecture in accordance with some aspects. Referring to FIG. 1B, there is illustrated a 5G system architecture 140B in a reference point representation. More specifically, LTE 102 can be in communication with RAN 110 as well as one or more other 5G core (5GC) network entities. The 5G system architecture 140B includes a plurality of network functions (NFs), such as access and mobility management function (AMF) 132, session management function (SMF) 136, policy control function (PCF) 148, application function (AF) 150, user plane function (UPF) 134, network slice selection function (NSSF) 142, authentication server function (AUSF) 144, and unified data management (UDM)/home subscriber server (HSS) 146. The UPF 134 can provide a connection to a data network (DN) 152, which can include, for example, operator services, Internet access, or thirdparty services. The AMF 132 can be used to manage access control and mobility and can also include network slice selection functionality. The SMF 136 can be configured to set up and manage various sessions according to a network policy. The UPF 134 can be deployed in one or more configurations according to a desired service type. The PCF 148 can be configured to provide a policy framework using network slicing, mobility management, and roaming (similar to PCRF in a 4G communication system). The UDM can be configured to store subscriber profiles and data (similar to an HSS in a 4G communication system).

In some aspects, the 5G system architecture 140B includes an IP multimedia subsystem (IMS) 168B as well as a plurality of IP multimedia core network subsystem entities, such as call session control functions (CSCFs). More specifically, the IMS 168B includes a CSCF, which can act as a proxy CSCF (P-CSCF) 162BE, a serving CSCF (S-CSCF) 164B, an emergency CSCF (E-CSCF) (not illustrated in FIG. 1B), or interrogating CSCF (I-CSCF) 166B. The P-CSCF 162B can be configured to be the first contact point for the UE 102 within the IM subsystem (IMS) 168B. The S-CSCF 164B can be configured to handle the session states in the network, and the E-CSCF can be configured to handle certain aspects of emergency sessions such as routing an emergency request to the correct emergency center or PSAP. The I-CSCF 166B can be configured to function as the contact point within an operator's network for all IMS connections destined to a subscriber of that network operator, or a roaming subscriber currently located within that network operator's service area. In some aspects, the I-CSCF 166B can be connected to another IP multimedia network 170E, e.g. an IMS operated by a different network operator.

In some aspects, the UDM/HSS 146 can be coupled to an application server 160E, which can include a telephony application server (TAS) or another application server (AS). The AS 160B can be coupled to the IMS 168B via the S-CSCF 164B or the I-CSCF 166B.

A reference point representation shows that interaction can exist between corresponding NF services. For example, FIG. 1B illustrates the following reference points: N1 (between the UE 102 and the AMF 132), N2 (between the RAN 110 and the AMF 132), N3 (between the RAN 110 and the UPF 134), N4 (between the SMF 136 and the UPF 134), N5 (between the PCF 148 and the AF 150, not shown), N6 (between the UPF 134 and the DN 152), N7 (between the SMF 136 and the PCF 148, not shown), N8 (between the UDM 146 and the AMF 132, not shown), N9 (between two UPFs 134, not shown), N10 (between the UDM 146 and the SMF 136, not shown), N11 (between the AMF 132 and the SMF 136, not shown), N12 (between the AUSF 144 and the AMF 132, not shown), N13 (between the AUSF 144 and the UDM 146, not shown), N14 (between two AMFs 132, not shown), N15 (between the PCF 148 and the AMF 132 in case of a non-roaming scenario, or between the PCF 148 and a visited network and AMF 132 in case of a roaming scenario, not shown), N16 (between two SMFs, not shown), and N22 (between AMF 132 and NSSF 142, not shown). Other reference point representations not shown in FIG. 1E can also be used.

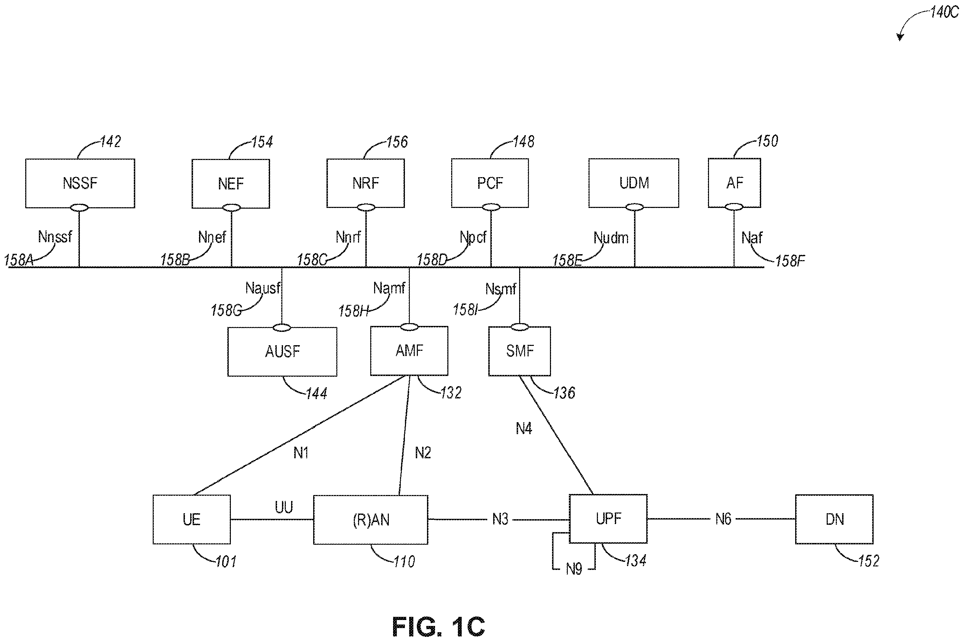

FIG. 1C illustrates a 5G system architecture 140C and a service-based representation. In addition to the network entities illustrated in FIG. 1B, system architecture 140C can also include a network exposure function (NEF) 154 and a network repository function (NRF) 156. In some aspects, 5G system architectures can be service-based and interaction between network functions can be represented by corresponding point-to-point reference points Ni or as service-based interfaces.

In some aspects, as illustrated in FIG. 1C, service-based representations can be used to represent network functions within the control plane that enable other authorized network functions to access their services. In this regard, 5G system architecture 140C can include the following service-based interfaces: Namf 158H (a service-based interface exhibited by the AMF 132), Nsmf 158I (a service-based interface exhibited by the SMF 136), Nnef 158B (a service-based interface exhibited by the NEF 154), Npcf 158D (a service-based interface exhibited by the PCF 148), a Nudm 158E (a service-based interface exhibited by the UDM 146), Naf 158F (a service-based interface exhibited by the AF 150), Nnrf 158C (a service-based interface exhibited by the NRF 156), Nnssf 158A (a service-based interface exhibited by the NSSF 142), Nausf 158G (a service-based interface exhibited by the AUSF 144). Other service-based interfaces (e.g., Nudr, N5g-eir, and Nudsf) not shown in FIG. 1C can also be used.

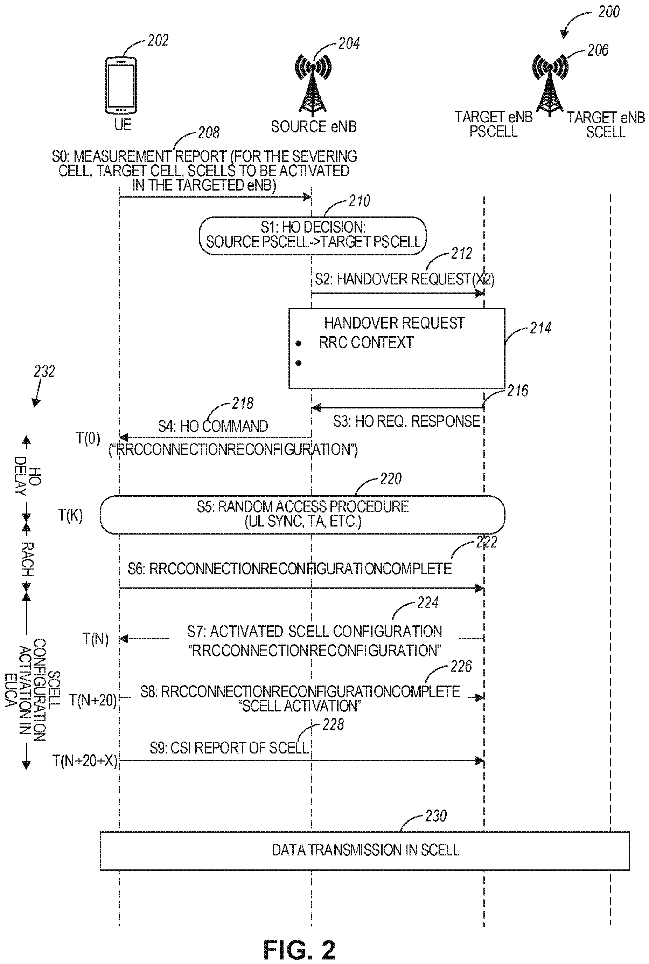

In some aspects, a UE can activate a secondary cell (SCell) by receiving RRC signaling (e.g., RRC Connection Reconfiguration information element) directly. In this regard, an approach for enhanced utilization of carrier aggregation (euCA) SCell direct activation during handover (HO) is to initiate SCell activation after successful HO and random access procedure sequentially, as shown in FIG. 2. The message exchanged and time spent on the necessary processing is also illustrated in FIG. 2. In some aspects, euCA SCell activation implies that the network and use RRC signaling or other higher layer signaling to directly activate the SCell for the UE.

FIG. 2 illustrates a communication exchange 200 between a UE 202, a source base station 204, and a target base station 206 in connection with euCA SCell direct activation with handover, in accordance with some aspects. Referring to FIG. 2, the communication exchange 200 can start with procedure S0, when UE 202 performs cell measurements and generates a measurement report 208 for transmission to the source base station 204. The measurement report 208 can be associated with measurements for the serving cell of base station 204, primary cell of the target base station 206, and one or more secondary cells to be activated in the target base station. At operation 210, the source base station 204 can perform a handover decision for performing a handover from a source primary cell (or primary serving cell, or PSCell) of base station 204 to a target PSCell of base station 206. At operation 212, the source base station 204 communicates a handover request to the target base station 206. The handover request 214 can include RRC context information associated with the handover and additional handover configuration information. At operation 216, the target base station 206 communicates a handover request response.

At operation 218, the source base station 204 communicates a handover command to the UE 202, which can be RRC signaling such as RRC connection reconfiguration signaling. At operation 220, UE 202 can perform a random access procedure with the target base station 206 in connection with the handover. When the handover is complete, UE 202 communicates RRC connection reconfiguration complete signaling to indicate the handover completion at operation 222.

At operation 224, euCA SCell configuration activation is initiated by RRC signaling (e.g., RRC connection signaling) communicated from the target base station 2062 UE 202. At operation 226, RRC connection complete signaling is communicated back from the UE to the target base station to indicate SCell activation completion. At operation 228, UE 202 can perform cell measurements and can communicate a CSI report of the SCell to base station 206. At operation 230, the UE and base station 206 can communicate data via the activated SCell.

As illustrated in FIG. 2, the source cell decides to initiate the handover based on measurement reports transmitted by the UE, conditional on the network configured measurements objects and triggering criteria. The source cell prepares the target cell for handover by sending the handover request message 214. Depending on the local conditions, the target cell can decide to either confirm or deny the handover request. This decision is communicated to the source cell in the handover request response message at operation 216.

If the UE can start to count the overall SCell activation delay 232 from the receiving of the HO command (at T0), the total activation delay can be determined based on:
(a) Handover delay: includes HO command processing time (Thorrc_process) and HO interruption time (Tinterrupt_ho). In connection with the target cell being known or unknown, Tsearch in Tinterrupt_HO cand be 0 or 80ms.
(b) Random access delay (Tul_rach): time to acquire the fine timing with the target eNB (PSCell).
(c) Direct SCell configuration and activation delay in euCA (Tconfig_direct_scell = 20ms + Tactivation_time). Tactivation_time is SCell direct activation delay without HO.

In some aspects, the total activation delay can include the part (b) and part (c) only if starting from SCell configuration RRC message. Under such definition, the same timing (i.e., n+20) and requirements as for RRC reconfiguration would apply for configuring SCells in activated/dormant state during HO.

In some aspects, for euCA direct SCell activation with HO, the total activation delay may be up to the definition of a starting point. Therefore, an open issue is how to define the timing requirements on SCell direct activation in euCA .

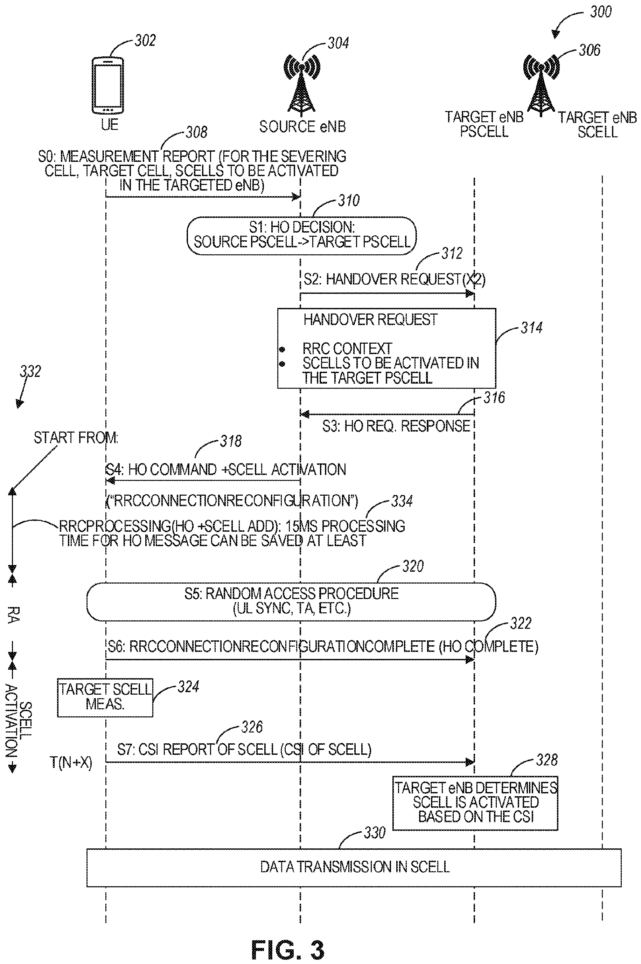

As shown in FIG. 2, with this approach for euCA direct SCell activation with HO, the UE has to decode RRC Connection Reconfiguration signaling twice (for HO command in operation 218 and SCell configuration in operation 224). This may not be an efficient alternative in terms of UE processing time. In some aspects, techniques disclosed herein (e.g., in connection with FIG. 3) can be used to optimize the procedure of euCA SCell activation with HO to minimize the total delay.

In some aspects, RRC signaling for SCell configuration can be communicated in advance of the HO procedure and can be combined with the HO command to save the UE processing time, as shown in FIG. 3. As a result, the total delay from the HO command can be reduced.

FIG. 3 illustrates another communication exchange 300 between a UE 302, a source base station 304, and a target base station 306 in connection with euCA SCell direct activation with handover, in accordance with some aspects. Referring to FIG. 3, the communication exchange 300 can start with procedure S0, when UE 302 performs cell measurements and generates a measurement report 308 for transmission to the source base station 304. The measurement report 308 can be associated with measurements for the serving cell of base station 304, primary cell of the target base station 306, and one or more secondary cells to be activated in the target base station 306. At operation 310, the source base station 304 can perform a handover decision for performing a handover from a source primary cell (or primary serving cell, or PSCell) of base station 304 to a target PSCell of base station 306. The source base station 304 can also select an SCell for activation based on the measurement report.

At operation 312, the source base station 304 communicates a handover request to the target base station 306. The handover request 314 can include RRC context information associated with the handover and additional handover configuration information. The handover request 314 can also include an indication of one or more SCells to be activated in the target base station 306. At operation 316, the target base station 306 communicates a handover request response. There handover request response can include an acknowledgment or rejection of the handover and/or an acknowledgment or rejection of the one or more SCells that are to be activated.

At operation 318, the source base station 304 communicates RRC signalling to the UE 302, which includes a handover command as well as an SCell activation command. The RRC signaling can include RRC connection reconfiguration signaling or another higher layer signaling. At operation 320, the UE 302 can perform a random access procedure with the target base station 306 in connection with the handover. When the handover is complete, the UE 302 communicates RRC connection reconfiguration complete signaling to indicate the handover completion at operation 322.

At operation 324, the UE 302 performs target SCell measurements. At operation 326, the UE 302 communicates a CSI report of the SCell (based on the SCell measurements) to the base station 306. At operation 328, target base station determines the SCell is activated based on the communicated CSI report. At operation 330, the UE and base station 306 can communicate data via the activated SCell.

In some aspects, the following handover request messaging can be communicated from the source base station to the target base station via an X2 interface:

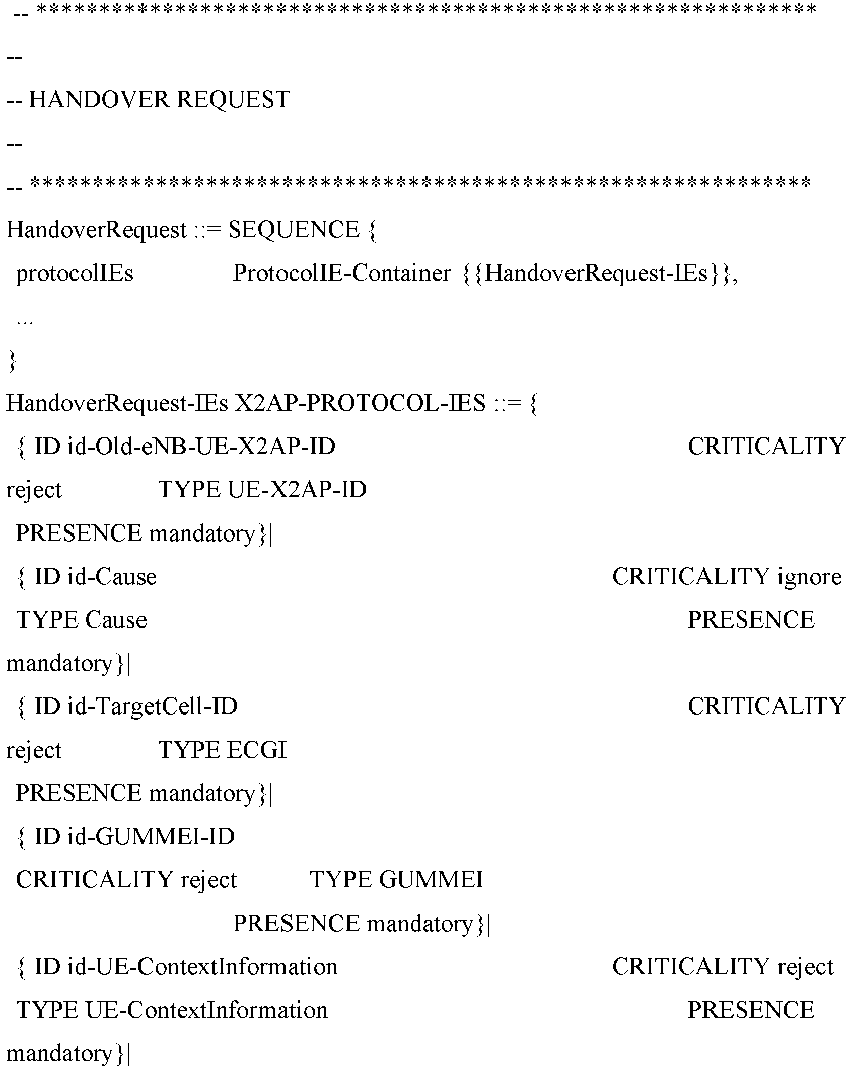

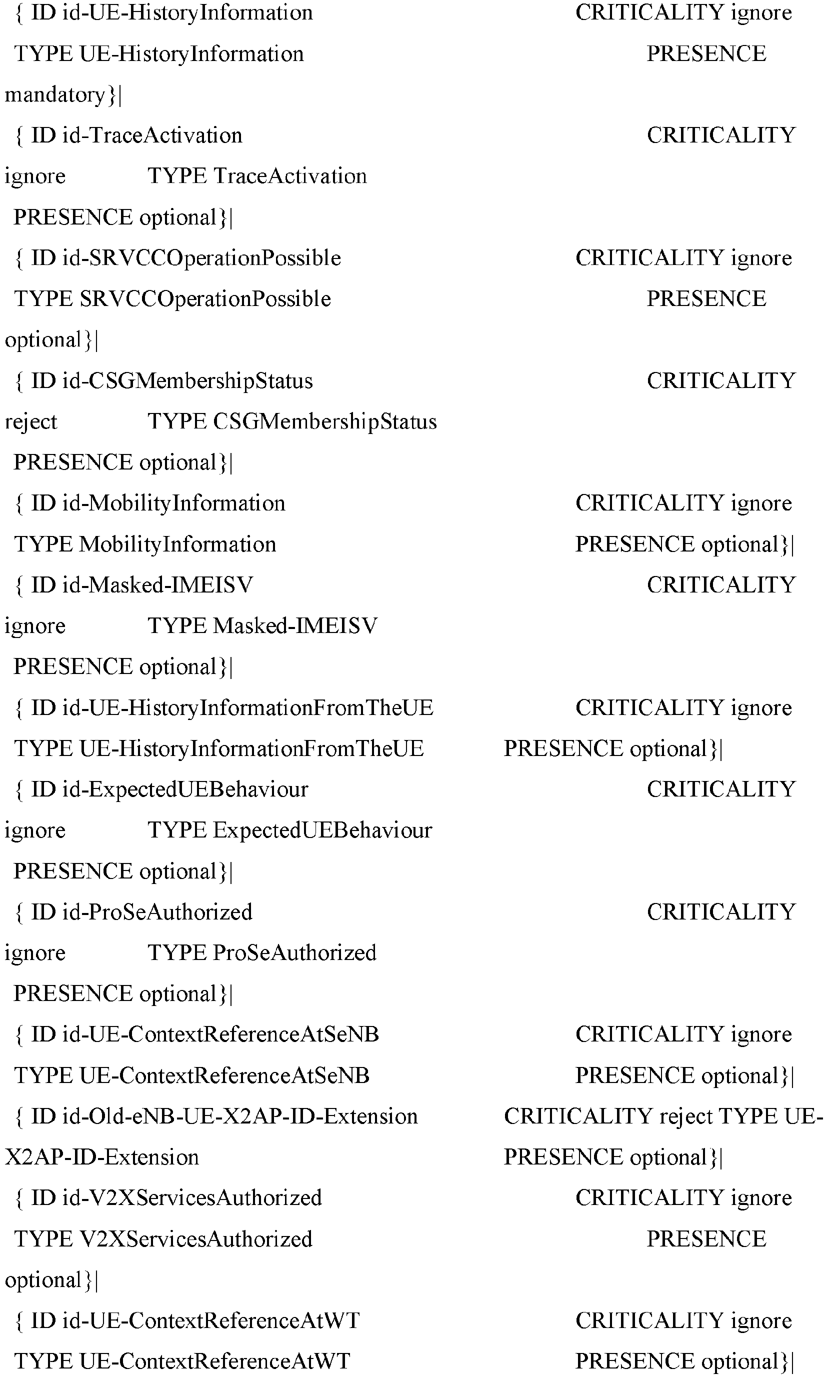

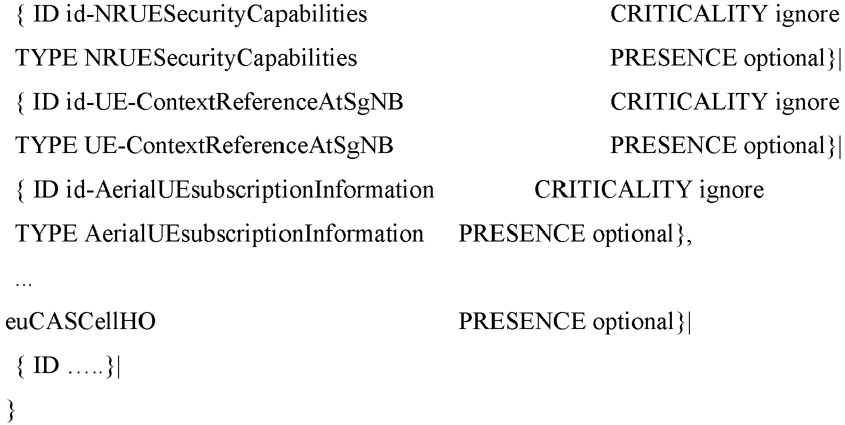

The "euCASCellHO" in this handover request messaging is an information element indicating the one or more SCells for activation in the target base station.

In some aspects, the following RRC signaling can be used in operation 318, to communicate the handover command together with euCA SCell activation:

RRCConnectionReconfiguration message:

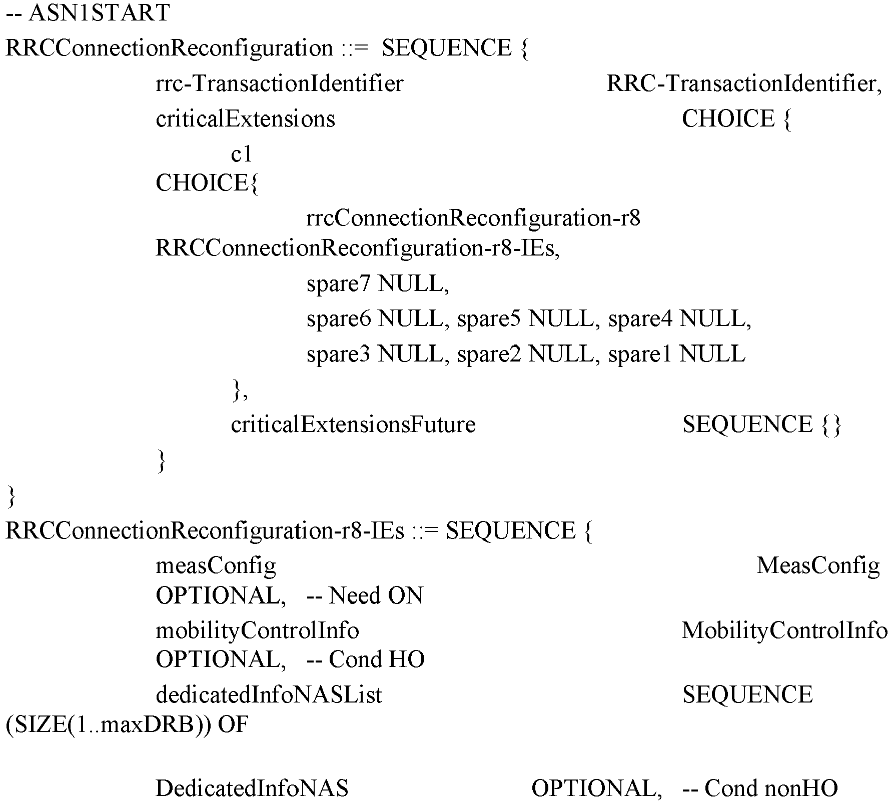

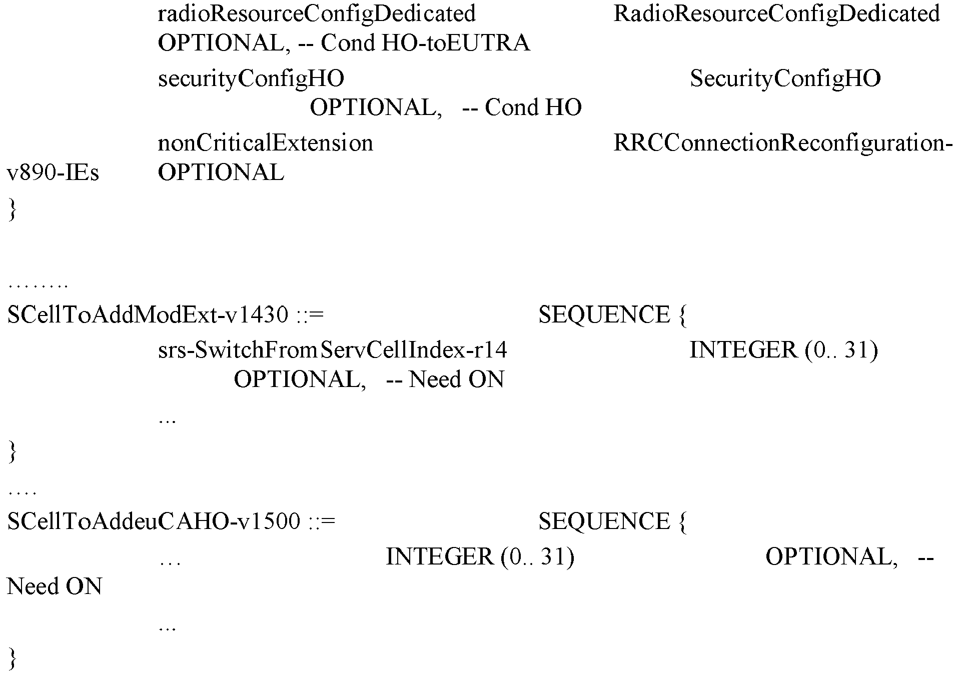

The "mobilityControlInfo" in the above RRC signaling is the handover command, and the "SCellToAddeuCAHO" is the SCell activation command.

In some aspects, the delay 332 of Scell activation in euCA with HO can be reduced if SCell configuration is handled with HO command in a same RRCConnectionReconfiguraiton IE (e.g., as indicated at 334 in FIG. 3). In some aspects, the UE can start to count the overall SCell activation delay from the receiving of HO command.

In some aspects, the handover procedure may be further delayed due to performing cell search during a blind HO (e.g. 80ms). That is, more optimizations on this procedure may be possible. For example, if there is idle mode measurement on the target cell in euCA, the target PScell to be HO can be assumed as a known certainly. In this case, Tinterrupt_ho can be reduced significantly. As a result, the delay from HO to SCell activation can be shortened.

In some aspects, the delay of Scell activation in euCA with for known cell can be shorter [10+80] ms than that of unknown cells.

In some aspects, in case of handover the UE may start SCell activation preferably after the successful UL grant from the target eNB (PSCell) in the normal random access procedure. Therefore, in order to avoid the too long and uncertain delay due to the random access, synchronized RACH-less handover when the uplink grant is provided by the old PCell can be considered in euCA SCell activation with HO. Put another way, when the source and target cells are small cells or they are synchronized, the communication exchange in FIG. 3 can take place without performing a RACH procedure.

In some aspects, the total Scell activation delay staring from communication of the HO command can be summarized in Table 1 below:

**TABLE 1**

| | | Opt1: legacy HO + euCA direct activation by RRC | Opt2 with unknown cell: euCA direct activation by RRC | Opt2 with known cell: euCA direct activation by RRC |
|---|---|---|---|---|
| T_{HORRC_process} | | 15ms | 15ms | 15ms |
| T_{interrupt_HO} = T_{search} + T_{IU} + 20 ms (Note 1) | | 130ms | 130ms | 50ms |
| T_{UL_RACH} | | 15ms | 15ms | 15ms |
| T_{config_Direct SCell (Note2)} | | 20ms + X ms | X ms | X-10 ms |
| Total delay | | 180+X ms | 160+X ms | 70+X ms |
| Note: | | | | |
| | 1. T_{IU} is the interruption uncertainty in acquiring the first available PRACH occasion in the new cell. T_{IU} can be up to 30 ms. | | | |
| | 2. Tconfig_Direct_SCell = 20ms + Tactivation_time, Tactivation_time is the SCell activation delay w/o HO ("X") which is TBD[Refer R4-1807936] | | | |

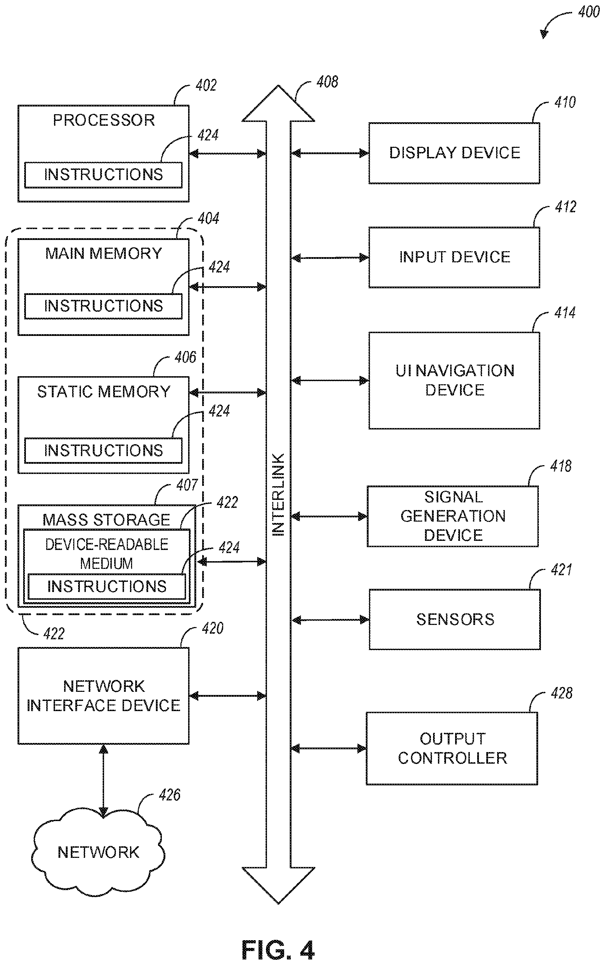

FIG. 4 illustrates a block diagram of a communication device such as an evolved Node-B (eNB), a next generation Node-B (gNB), an access point (AP), a wireless station (STA), a mobile station (MS), or a user equipment (LTE), in accordance with some aspects and to perform one or more of the techniques disclosed herein. In alternative aspects, the communication device 400 may operate as a standalone device or may be connected (e.g., networked) to other communication devices.

Circuitry (e.g., processing circuitry) is a collection of circuits implemented intangible entities of the device 400 that include hardware (e.g., simple circuits, gates, logic, etc.). Circuitry membership may be flexible over time. Circuitries include members that may, alone or in combination, perform specified operations when operating. In an example, the hardware of the circuitry may be immutably designed to carry out a specific operation (e.g., hardwired). In an example, the hardware of the circuitry may include variably connected physical components (e.g., execution units, transistors, simple circuits, etc.) including a machine-readable medium physically modified (e.g., magnetically, electrically, moveable placement of invariant massed particles, etc.) to encode instructions of the specific operation.

In connecting the physical components, the underlying electrical properties of a hardware constituent are changed, for example, from an insulator to a conductor or vice versa. The instructions enable embedded hardware (e.g., the execution units or a loading mechanism) to create members of the circuitry in hardware via the variable connections to carry out portions of the specific operation when in operation. Accordingly, in an example, the machine-readable medium elements are part of the circuitry or are communicatively coupled to the other components of the circuitry when the device is operating. In an example, any of the physical components may be used in more than one member of more than one circuitry. For example, under operation, execution units may be used in a first circuit of a first circuitry at one point in time and reused by a second circuit in the first circuitry, or by a third circuit in a second circuitry at a different time. Additional examples of these components with respect to the device 400 follow.

In some aspects, the device 400 may operate as a standalone device or may be connected (e.g., networked) to other devices. In a networked deployment, the communication device 400 may operate in the capacity of a server communication device, a client communication device, or both in server-client network environments. In an example, the communication device 400 may act as a peer communication device in peer-to-peer (P2P) (or other distributed) network environment. The communication device 400 may be a UE, eNB, PC, a tablet PC, a STB, a PDA, a mobile telephone, a smartphone, a web appliance, a network router, switch or bridge, or any communication device capable of executing instructions (sequential or otherwise) that specify actions to be taken by that communication device. Further, while only a single communication device is illustrated, the term "communication device" shall also be taken to include any collection of communication devices that individually or jointly execute a set (or multiple sets) of instructions to perform any one or more of the methodologies discussed herein, such as cloud computing, software as a service (SaaS), and other computer cluster configurations.

Examples, as described herein, may include, or may operate on, logic or a number of components, modules, or mechanisms. Modules are tangible entities (e.g., hardware) capable of performing specified operations and may be configured or arranged in a certain manner. In an example, circuits may be arranged (e.g., internally or with respect to external entities such as other circuits) in a specified manner as a module. In an example, the whole or part of one or more computer systems (e.g., a standalone, client or server computer system) or one or more hardware processors may be configured by firmware or software (e.g., instructions, an application portion, or an application) as a module that operates to perform specified operations. In an example, the software may reside on a communication device-readable medium. In an example, the software, when executed by the underlying hardware of the module, causes the hardware to perform the specified operations.

Accordingly, the term "module" is understood to encompass a tangible entity, be that an entity that is physically constructed, specifically configured (e.g., hardwired), or temporarily (e.g., transitorily) configured (e.g., programmed) to operate in a specified manner or to perform part or all of any operation described herein. Considering examples in which modules are temporarily configured, each of the modules need not be instantiated at any one moment in time. For example, where the modules comprise a general-purpose hardware processor configured using software, the general-purpose hardware processor may be configured as respective different modules at different times. The software may accordingly configure a hardware processor, for example, to constitute a particular module at one instance of time and to constitute a different module at a different instance of time.

Communication device (e.g., LTE) 400 may include a hardware processor 402 (e.g., a central processing unit (CPU), a graphics processing unit (GPU), a hardware processor core, or any combination thereof), a main memory 404, a static memory 406, and mass storage 407 (e.g., hard drive, tape drive, flash storage, or other block or storage devices), some or all of which may communicate with each other via an interlink (e.g., bus) 408.

The communication device 400 may further include a display device 410, an alphanumeric input device 412 (e.g., a keyboard), and a user interface (UI) navigation device 414 (e.g., a mouse). In an example, the display device 410, input device 412 and UI navigation device 414 may be a touchscreen display. The communication device 400 may additionally include a signal generation device 418 (e.g., a speaker), a network interface device 420, and one or more sensors 421, such as a global positioning system (GPS) sensor, compass, accelerometer, or another sensor. The communication device 400 may include an output controller 428, such as a serial (e.g., universal serial bus (USB), parallel, or other wired or wireless (e.g., infrared (IR), near field communication (NFC), etc.) connection to communicate or control one or more peripheral devices (e.g., a printer, card reader, etc.).

The storage device 407 may include a communication device-readable medium 422, on which is stored one or more sets of data structures or instructions 424 (e.g., software) embodying or utilized by any one or more of the techniques or functions described herein. In some aspects, registers of the processor 402, the main memory 404, the static memory 406, and/or the mass storage 407 may be, or include (completely or at least partially), the device-readable medium 422, on which is stored the one or more sets of data structures or instructions 424, embodying or utilized by any one or more of the techniques or functions described herein. In an example, one or any combination of the hardware processor 402, the main memory 404, the static memory 406, or the mass storage 416 may constitute the device-readable medium 422.

As used herein, the term "device-readable medium" is interchangeable with "computer-readable medium" or "machine-readable medium". While the communication device-readable medium 422 is illustrated as a single medium, the term "communication device-readable medium" may include a single medium or multiple media (e.g., a centralized or distributed database, and/or associated caches and servers) configured to store the one or more instructions 424. The term "communication device-readable medium" is inclusive of the terms "machine-readable medium" or "computer-readable medium", and may include any medium that is capable of storing, encoding, or carrying instructions (e.g., instructions 424) for execution by the communication device 400 and that cause the communication device 400 to perform any one or more of the techniques of the present disclosure, or that is capable of storing, encoding or carrying data structures used by or associated with such instructions. Non-limiting communication device-readable medium examples may include solid-state memories and optical and magnetic media. Specific examples of communication device-readable media may include: non-volatile memory, such as semiconductor memory devices (e.g., Electrically Programmable Read-Only Memory (EPROM), Electrically Erasable Programmable Read-Only Memory (EEPROM)) and flash memory devices; magnetic disks, such as internal hard disks and removable disks; magneto-optical disks; Random Access Memory (RAM); and CD-ROM and DVD-ROM disks. In some examples, communication device-readable media may include non-transitory communication device-readable media. In some examples, communication device-readable media may include communication device-readable media that is not a transitory propagating signal.

The instructions 424 may further be transmitted or received over a communications network 426 using a transmission medium via the network interface device 420 utilizing any one of a number of transfer protocols. In an example, the network interface device 420 may include one or more physical jacks (e.g., Ethernet, coaxial, or phone jacks) or one or more antennas to connect to the communications network 426. In an example, the network interface device 420 may include a plurality of antennas to wirelessly communicate using at least one of single-input-multiple-output (SIMO), MIMO, or multiple-input-single-output (MISO) techniques. In some examples, the network interface device 420 may wirelessly communicate using Multiple User MIMO techniques.

The term "transmission medium" shall be taken to include any intangible medium that is capable of storing, encoding or carrying instructions for execution by the communication device 400, and includes digital or analog communications signals or another intangible medium to facilitate communication of such software. In this regard, a transmission medium in the context of this disclosure is a device-readable medium.

A communication device-readable medium may be provided by a storage device or other apparatus which is capable of hosting data in a non-transitory format. In an example, information stored or otherwise provided on a communication device-readable medium may be representative of instructions, such as instructions themselves or a format from which the instructions may be derived. This format from which the instructions may be derived may include source code, encoded instructions (e.g., in compressed or encrypted form), packaged instructions (e.g., split into multiple packages), or the like. The information representative of the instructions in the communication device-readable medium may be processed by processing circuitry into the instructions to implement any of the operations discussed herein. For example, deriving the instructions from the information (e.g., processing by the processing circuitry) may include: compiling (e.g., from source code, object code, etc.), interpreting, loading, organizing (e.g., dynamically or statically linking), encoding, decoding, encrypting, unencrypting, packaging, unpackaging, or otherwise manipulating the information into the instructions.

In an example, the derivation of the instructions may include assembly, compilation, or interpretation of the information (e.g., by the processing circuitry) to create the instructions from some intermediate or preprocessed format provided by the machine-readable medium. The information, when provided in multiple parts, may be combined, unpacked, and modified to create the instructions. For example, the information may be in multiple compressed source code packages (or object code, or binary executable code, etc.) on one or several remote servers. The source code packages may be encrypted when in transit over a network and decrypted, uncompressed, assembled (e.g., linked) if necessary, and compiled or interpreted (e.g., into a library, stand-alone executable etc.) at a local machine, and executed by the local machine.

Although an aspect has been described with reference to specific exemplary aspects, it will be evident that various modifications and changes may be made to these aspects without departing from the broader scope of the present disclosure. Accordingly, the specification and drawings are to be regarded in an illustrative rather than a restrictive sense. This Detailed Description, therefore, is not to be taken in a limiting sense, and the scope of various aspects is defined only by the appended claims, along with the full range of equivalents to which such claims are entitled.

## Claims

1. An apparatus for a user equipment, UE (101, 102, 202, 302), the apparatus comprising:
processing circuitry, wherein to configure the UE (101, 102, 202, 302) for secondary cell, SCell, activation during a handover in a 5G-New Radio, NR, network, the processing circuitry is configured to:
encode a measurement report (208, 308) with measurement results for transmission to a source base station (204, 304);
decode radio resource control, RRC, signaling received from the source base station (204, 304) in response to the measurement report (208, 308), the RRC signaling including a handover command for a handover to a target base station (206, 306, 2062) and an indication that an SCell of the target base station (206, 306, 2062) is in an activated state; and
perform configuration of the SCell based on the indication, the configuration being performed within a delay period, and the delay period being configured based on an activation delay, Tactivation_time, associated with the SCell; and
memory coupled to the processing circuitry and configured to store the RRC signaling.

2. The apparatus of claim 1, wherein the delay period is further configured based on an RRC procedure delay associated with the handover command.

3. The apparatus of claim 1, wherein the delay period is further configured based on an interruption time associated with the handover.

4. The apparatus of claim 3, wherein the interruption time includes a search time associated with searching for the target base station (206, 306, 2062).

5. The apparatus of claim 4, wherein the search time is 0 when the target base station (206, 306, 2062) is known to the UE (101, 102, 202, 302).

6. The apparatus of claim 1, wherein the RRC signaling is a RRC reconfiguration message received from the source base station (204, 304).

7. The apparatus of claim 1, further comprising transceiver circuitry coupled to the processing circuitry; and, one or more antennas coupled to the transceiver circuitry.

8. A computer-readable storage medium that stores instructions for execution by one or more processors of a user equipment, UE (101, 102, 202, 302), the instructions to configure the UE (101, 102, 202, 302) for secondary cell, SCell, activation during a handover in a 5G-New Radio, NR, network, and to cause the UE (101, 102, 202, 302) to perform operations comprising:
encoding a measurement report (208, 308) with measurement results for transmission to a source base station (204, 304);
decoding radio resource control, RRC, signaling received from the source base station (204, 304) in response to the measurement report (208, 308), the RRC signaling including a handover command for a handover to a target base station (206, 306, 2062) and an indication that an SCell of the target base station (206, 306, 2062) is in an activated state; and
performing configuration of the SCell based on the indication, the configuration being performed within a delay period, and the delay period being configured based on an activation delay, Tactivation_time, associated with the SCell.

9. The computer-readable storage medium of claim 8, wherein the delay period is further configured based on an RRC procedure delay associated with the handover command.

10. The computer-readable storage medium of claim 8, wherein the delay period is further configured based on an interruption time associated with the handover.

11. The computer-readable storage medium of claim 10, wherein the interruption time includes a search time associated with searching for the target base station (206, 306, 2062).

12. The computer-readable storage medium of claim 11, wherein the search time is 0 when the target base station (206, 306, 2062) is known to the UE (101, 102, 202, 302).

13. The computer-readable storage medium of claim 8, wherein the RRC signaling is a RRC reconfiguration message received from the source base station (204, 304).

14. A computer-readable storage medium that stores instructions for execution by one or more processors of a source base station (204, 304), the instructions to configure the source base station for secondary cell, SCell, activation during a handover in a 5G-New Radio, NR, network, and to cause the source base station to perform operations comprising:
decode a measurement report (208, 308) with measurement results, the measurement report (208, 308) received from a user equipment, UE (101, 102, 202, 302); and
encode radio resource control, RRC, signaling for transmission to the UE (101, 102, 202, 302) in response to the measurement report (208, 308), the RRC signaling including a handover command for a handover to a target base station (206, 306, 2062) and an indication that an SCell of the target base station (206, 306, 2062) is in an activated state, the SCell being configured within a delay period, the delay period being configured based on an activation delay, Tactivation_time, associated with the SCell.

15. The computer-readable storage medium of claim 14, wherein the delay period is further configured based on an interruption time associated with the handover, and wherein the interruption time includes a search time associated with searching for the target base station (206, 306, 2062).
